# EUROPEAN PATENT SPECIFICATION

(11) **EP 2 860 710 B1**
(45) Date of publication and mention of the grant of the patent: **15.08.2018**
(21) Application number: 13800526.9
(22) Date of filing: 06.06.2013
(51) Int. Cl.: G07F 7/08, G06Q 20/34

(54) **METHOD AND SYSTEM FOR OFF-LINE CREDIT FOR LOAD**
VERFAHREN UND SYSTEM FÜR OFFLINE-LADEKREDITE
MÉTHODE ET SYSTÈME DE CRÉDIT HORS LIGNE POUR CHARGEMENT

(30) Priority: 06.06.2012 CN 201210183592
(43) Date of publication of application: 15.04.2015
(73) Proprietor: China Unionpay Co., Ltd, Shanghai 200135 (CN)
(72) Inventor: MENG, Hongwen, Shanghai 200135 (CN); WAN, Gaofeng, Shanghai 200135 (CN); ZHENG, Jianbin, Shanghai 200135 (CN)
(74) Representative: Stork Bamberger Patentanwälte PartmbB
(86) International application number: PCT/CN2013/076857
(87) International publication number: WO 2013/182067

(56) References cited:
- EP-A2- 0 623 903
- EP-A2- 0 911 772
- WO-A1-03/091924
- WO-A1-2010/132963
- CA-A1- 2 767 500
- CN-A- 101 425 860
- CN-A- 101 984 469
- CN-A- 102 289 893
- GB-A- 2 288 267
- JP-A- 2011 065 391
- KR-A- 20100 009 238
- US-A- 5 744 787
- US-A1- 2004 254 892
- US-A1- 2005 279 824

## Description

### PRIORITY

The application claims priority from Chinese patent application No. 201210183592.6, entitled "Offline Credit Loading Method and System", filed on June 6, 2012, the content of which is incorporated herein in its entirety by reference.

### FIELD OF THE INVENTION

The invention relates to electronic cash, and in particular, to an offline crediting method and system adapted for electronic cash.

### BACKGROUND

An electronic cash card is stored therein with legitimate cash balance which can be used for offline consumption, thus meeting requirements of the applications of some industries (e.g., bus, taxi, railway, subway, etc.). When there is not enough amount (or limit) in the account of electronic cash card (referred to as "cash card" for short), the card needs to be recharged.

One way of recharging is credit loading, which is a process of deducting some capital from the account (i.e., crediting load account, which can be a credit card, a debit card associated with the cash card, etc.) of card owner and storing the deducted amount (or limit) into the cash card. However, credit loading in the prior art has to be performed online. That is, when the cash card is being recharged at a recharge terminal, the recharge terminal must communicate with the issuing bank of the credit card, debit card which is used as the credit loading account and is associated with the cash card so as to verify authenticity of the cash card and card owner, thus completing credit loading. Online credit loading completes recharging the cash card according to recharge script returned from the issuing bank, and realize a synchronization of capital between electronic cash account of card owner and credit loading account in real time.

EP 0 911 772 A2 relates to a method and system for batch-loading a stored value application of a microprocessor-based stored value card.

KR 2010-0009238 relates to a method for changing corporation card credit limit, a method for approving corporation cared use, a method for changing group of corporation card and a system for requesting the change of corporation card credit limit.

GB-A-2288267 relates to smart cards designed to be used as pre-payment memory devices.

### SUMMARY OF THE INVENTION

According to an object of the invention, an offline credit loading system is disclosed according to the features of claims 1 to 5.

### BRIEF DESCRIPTION OF THE DRAWINGS

Various aspects of the invention will be more clearly understood by those skilled in the art after reading the particular embodiments with reference to the accompanying drawings. It is understood by those skilled in the art that the drawings are merely used for explaining the technical solutions of the invention in conjunction with the particular embodiments, rather than limiting the scope of protection of the invention.
Fig. 1 is a schematic view of an offline credit loading system according to an embodiment.
Fig. 2 is a flowchart view of an offline credit loading method according to an embodiment.
Fig. 3 is a schematic view showing information interaction in the offline credit loading method according to an embodiment.
Fig. 4 is a schematic view showing information interaction in the offline credit loading method according to an embodiment.
Fig. 5 is a schematic view showing information interaction in the offline credit loading method according to an embodiment.

### DETAILED DESCRIPTION OF THE INVENTION

The particular embodiments of the invention will be further described in detail hereinafter with reference to the accompanying drawings.

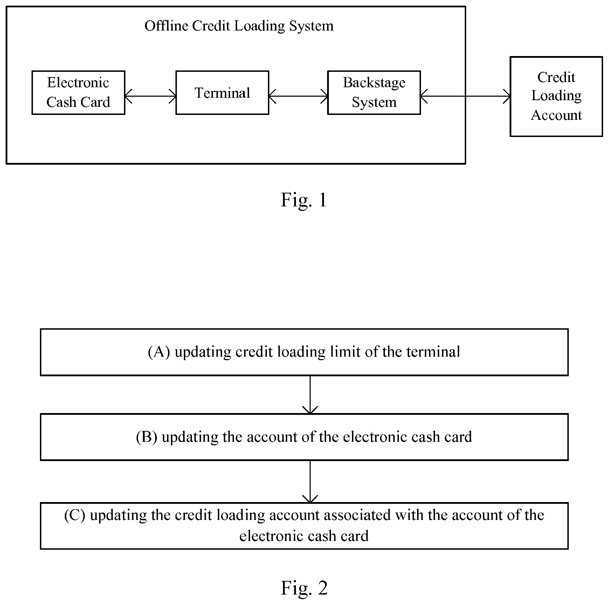

Fig. 1 is a schematic view of an offline credit loading system according to an embodiment. As shown in the figure, the system comprises an electronic cash card, a terminal and a backstage system. The terminal is configured to perform update of credit loading limit of the terminal by communicating with the backstage system. Here, the credit loading limit of the terminal is a sum of capital that allows for offline credit loading. The electronic cash card is configured to perform update of the account of electronic cash card by communicating with the terminal, wherein some capital of the credit loading limit of the terminal is transferred to the account of electronic cash card. Here, the electronic cash card for offline credit loading is associated in advance with the credit loading account in the backstage system. According to the embodiment of the invention, the electronic cash card can perform credit loading by merely communicating with the terminal without need for online processing with the issuing bank of the credit loading account, which will be described with more details later. The backstage system is configured to enable the credit loading account that is associated with the account of the electronic cash card to be updated according to information on offline credit loading received form the terminal.

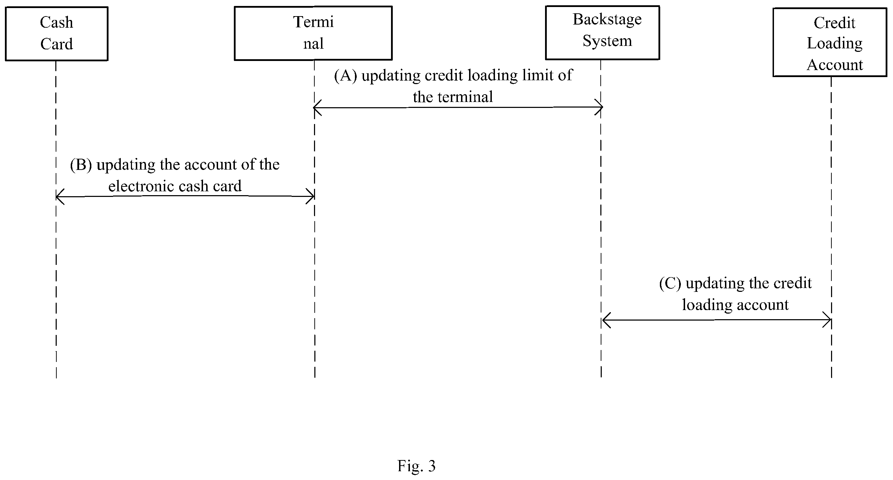

Fig. 2 is a flowchart view of an offline credit loading method according to an embodiment. The offline credit loading method according to the embodiment will be described herein with reference to the schematic views of information interaction shown in Figs. 3 to 5. As shown in Figs. 2 and 3, at step (A), the terminal updates the credit loading limit of the terminal by communicating with the backstage system; at step (B), the electronic card updates the account of electronic cash card by communicating with the terminal; at step (C), the backstage system enables the credit loading account associated with the account of electronic cash card to be updated according to information on offline credit loading received from the terminal. It can be understood that the step (A) herein is optional since when the credit loading limit of the terminal is not enough to recharge the recharge limit requested by the electronic cash card, the terminal will request for an update of the credit loading limit of the terminal; alternatively, the terminal can also request for an update of the credit loading limit of the terminal on its own initiative at any time, e.g., after the last time when the account of the electronic cash card was updated, or after the credit loading account was updated.

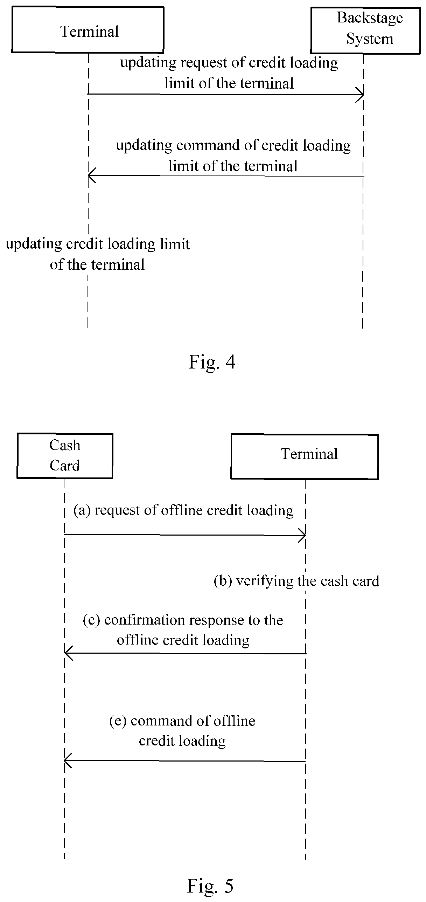

Fig. 4 is a schematic view showing information interaction in the offline credit loading method according to an embodiment. Fig. 4 schematically shows information interaction between the terminal and the backstage system at step (A), wherein firstly, the terminal sends an update request of the credit loading limit of the terminal to the backstage system, the update request comprises ID of the safety module provided in the terminal, and wherein, the safety module is used for storing the credit loading limit of the terminal. Then, the backstage system generates an update command of the credit loading limit of the terminal according to the update request of the credit loading limit of the terminal. Then, the terminal receives the update command of the credit loading limit of the terminal, and updates the credit loading limit of the terminal stored in the safety module according to the update command of the credit loading limit of the terminal. In one example, the backstage system stores a master key for limit update, and the safety module stores a sub key for limit update, wherein the backstage system calculates the sub key for limit update using the master key for limit update and based on the ID of the safety module, and encrypts the update command of the credit loading limit of the terminal using the calculated the sub key for limit update, and the terminal decrypts the update command of the credit loading limit of the terminal using the sub key for limit update. For example, the backstage system can calculate the sub key for limit update according to the terminal ID (TID), merchant ID (MID) and safety module ID using a predetermined algorithm.

Fig. 5 is a schematic view showing information interaction in the offline credit loading method according to an embodiment. Fig. 5 schematically shows information interaction between the electronic cash card and the terminal at step (B). At step (a), the electronic cash card sends a request of offline credit loading to the terminal. At step (b), the terminal verifies the electronic cash card according to the request of offline credit loading. At step (c), the terminal returns a confirmation response to the offline credit loading to the electronic cash card. At step (d), the electronic cash card verifies the terminal according to the confirmation response to the offline credit loading. At step (e), the terminal sends a command of offline credit loading to the electronic cash card. At step (f), the electronic cash card updates the account of the electronic cash card according to the command of offline credit loading.

In one example, the safety module also stores a master key for offline credit loading, and the electronic cash card stores a sub key for offline credit loading, wherein the request of offline credit loading comprises a first authentication code of offline credit loading which is generated by the electronic cash card based on the sub key for offline credit loading and a first category of transaction data; and the safety module is further configured to calculate the sub key for offline credit loading according to the ID of the electronic cash card and the master key for offline credit loading, and to use the calculated sub key for offline credit loading and the first category of transaction data to generate a second authentication code of offline credit loading; and when the second authentication code of offline credit loading is the same as the first authentication code of offline credit loading, the safety module determines that the electronic cash card has passed the authentication.

For example, the cash card can calculate a process key of the sub key for offline credit loading, and organizes transaction elements as the data generating the first authentication code of offline credit loading, i.e., the first category of transaction data. The transaction elements can comprise counts of offline credit loading. Here, the cash card can store a counter for offline credit loading to calculate the counts of offline credit loading. Then, the cash card can use the process key and the above organized data to generate the first authentication code of offline credit loading according to a predetermined algorithm. On the other hand, the terminal verifies the first authentication code of offline credit loading from the cash card. The terminal can calculate the sub key for offline credit loading corresponding to the current cash card according to the ID of the cash card, and then calculate the process key of the cash card according to the calculated sub key for offline credit loading. The terminal re-calculates the second authentication code of offline credit loading of the cash card by using the process key and the first category of transaction data. The terminal verifies the cash card by comparing the first authentication code of offline credit loading of the cash card with the second authentication code of offline credit loading of the cash card to see if they are the same. Those skilled in the art will understand that other ways of verifying the electronic cash card can also be used.

In another example, the confirmation response to offline credit loading comprises a first confirmation code of offline credit loading which is generated by the safety module based on the calculated sub key for offline credit loading and a second category of transaction data, and the electronic cash card is further configured to calculate a second confirmation code of offline credit loading based on the sub key for offline credit loading and the second category of transaction data; and when the second confirmation code of offline credit loading is the same as the first confirmation code of offline credit loading, the electronic cash card determines that the terminal has passed the authentication.

For example, the terminal calculates the first confirmation code of offline credit loading by using the process key of the cash card calculated according to the calculated sub key for offline credit loading and a second category of transaction data (e.g., the amount of offline credit loading, the date of transaction, etc.) that is different from the first category of transaction data according to a predetermined algorithm. On the other hand, the cash card organizes the second category of transaction data, and uses the process key corresponding to the sub key of offline credit loading and the second category of transaction data to calculate the second confirmation code of offline credit loading, and verifies the terminal by comparing the first confirmation code of offline credit loading with the second confirmation code of offline credit loading to see if they are the same. Those skilled in the art will understand that other ways of verifying the terminal can also be used.

In the above embodiment, the safety module provided in the terminal can be a SAM card. The sub key for limit update distributed by the backstage system and the sub key for offline credit loading can be stored in the SAM card. Therefore, the SAM card completes authentication of the cash card.

In one embodiment, at step (C), the backstage system enables the credit loading account associated with the account of electronic cash card to be updated according to information on offline credit loading received from the terminal. Here, the information on offline credit loading may comprise details of offline credit loading, authentication code of transaction or authentication code of issuing bank, wherein the authentication code of transaction or the authentication code of issuing bank are calculated by the cash card, the authentication code of transaction is used for the backstage system to make the confirmation and the authentication code of issuing bank is used for the backstage system to make the confirmation. The terminal can send information on offline credit loading at designated time by the backstage system, and the backstage system can use the information on offline credit loading to communicate with the issuing bank so as to enable the credit loading account associated with the account of electronic cash card to be updated. The backstage system can transfer amount of credit loading to a merchant account associated with the terminal from the credit loading account associated with the account of electronic cash card at an appropriate time.

According to an embodiment an electronic cash card is disclosed which is configured to be able to send the request of offline credit loading to the terminal, to verify the terminal according to the confirmation response to the offline credit loading returned from the terminal, to receive the command of offline credit loading from the terminal, and to update the account of the electronic cash card according to the command of offline credit loading. In one example, the electronic cash card stores a predetermined value, and the electronic cash card is configured such that when the balance of the account of electronic cash card is lower than the predetermined value, the electronic cash card sends the request of offline credit loading to the terminal.

According to an embodiment an offline credit loading terminal is disclosed which comprises a safety module used for storing credit loading limit of the terminal, wherein the terminal is configured to be able to send the update request of credit loading limit of the terminal to the backstage system, the update request of credit loading limit of the terminal comprises ID of the safety module, the terminal is further configured to receive the update command of the credit loading limit of the terminal, and to update the credit loading limit of the terminal stored in the safety module according to the update command of the credit loading limit of the terminal. In one example, the terminal is further configured to be able to receive the request of offline credit loading from the electronic cash card, to verify the electronic cash card according to the request of offline credit loading, and to send the command of offline credit loading to the electronic cash card, which command is used for updating the account of the electronic cash card.

Through description of the above embodiments, those with ordinary skills in the art will understand that various variations and replacements can also be made to the particular embodiments of the invention without departing from the scope of the invention. These variations and replacements all fall within the scope defined by the claims of the invention.

## Claims

1. An offline credit loading system comprising an electronic cash card, a terminal and backstage system, wherein the terminal comprises a safety module, wherein the safety module of the terminal is a SAM card, wherein the terminal is configured to perform update of credit loading limit of a terminal by communicating with the backstage system, the terminal credit loading limit is a sum of capital that allows for offline credit loading,
the electronic cash card is configured to perform update of the account of electronic cash card by communicating with the terminal, wherein some capital of the credit loading limit of the terminal is transferred to the account of electronic cash card, and
the backstage system is configured to enable the credit loading account associated with the account of electronic cash card to be updated according to information on offline credit loading received from the terminal, wherein the terminal is configured to send an update request of credit loading limit of the terminal to the backstage system, which request comprises ID of a safety module provided in the terminal, wherein the safety module is used for storing the credit loading limit of the terminal,
the backstage system is configured to generate an update command of the credit loading limit of the terminal according to the update request of credit loading limit of the terminal,
the terminal is configured to receive the update command of credit loading limit of the terminal and update the credit loading limit of the terminal stored in the safety module according to the update command of the credit loading limit of the terminal, and wherein
the safety module also stores a master key for offline credit loading,
the electronic cash card stores a sub key for offline credit loading,
the electronic cash card is configured to send a request of offline credit loading to the terminal,
wherein the request of offline credit loading comprises a first authentication code of offline credit loading which is generated by the electronic cash card based on the sub key for offline credit loading and a first category of transaction data, and the safety module is further configured to calculate the sub key for offline credit loading according to the ID of the electronic cash card and the master key for offline credit loading, and to use the calculated sub key for offline credit loading and the first category of transaction data to generate a second authentication code of offline credit loading; and the safety module determines that the electronic cash card has passed the authentication when the second authentication code of offline credit loading is the same as the first authentication code of offline credit loading, the terminal is configured to return a confirmation response to the offline credit loading to the electronic cash card.

2. The system according to claim 1, **characterized in that**, the terminal is configured to verify the electronic cash card according to the request of offline credit loading,
the electronic cash card is configured to verify the terminal according to the confirmation response to the offline credit loading,
the terminal is configured to send a command of offline credit loading to the electronic cash card, and
the electronic cash card is configured to update the account of electronic cash card according to the command of offline credit loading.

3. The system according to claim 2, **characterized in that**,
the electronic cash card is configured such that when the balance of the account of electronic cash card is lower than a predetermined value, the electronic cash card sends the request of offline credit loading to the terminal.

4. The system according to claim 3, **characterized in that**, the backstage system stores a master key for limit update,
the safety module stores a sub key for limit update,
wherein the backstage system calculates the sub key for limit update using the master key for limit update and based on the ID of the safety module, and encrypts the update command of the credit loading limit of the terminal using the calculated the sub key for limit update, and
the terminal decrypts the update command of the credit loading limit of the terminal using the sub key for limit update.

5. The system according to claim 1, **characterized in that**,
the confirmation response to the offline credit loading comprises a first confirmation code of offline credit loading which is generated by the safety module based on the calculated sub key for offline credit loading and a second category of transaction data, and
the electronic cash card is further configured to calculate a second confirmation code of offline credit loading based on the sub key for offline credit loading and the second category of transaction data; and when the second confirmation code of offline credit loading is the same as the first confirmation code of offline credit loading, the electronic cash card determines that the terminal has passed the authentication.

## Patentansprüche

1. Offline-Kreditladesystem umfassend eine elektronische Geldkarte, ein Endgerät und ein Backstage-System, wobei das Endgerät ein Sicherheitsmodul umfasst, wobei das Sicherheitsmodul des Endgeräts eine SAM-Karte ist,
wobei das Endgerät konfiguriert ist, um durch Kommunizieren mit dem Backstage-System eine Aktualisierung einer Kreditladegrenze eines Endgeräts durchzuführen, wobei die Endgerät-Kreditladegrenze eine Summe von Kapital ist, die eine Offline-Kreditladung erlaubt,
die elektronische Geldkarte konfiguriert ist, um durch Kommunizieren mit dem Endgerät eine Aktualisierung der elektronischen Geldkarte durchzuführen, wobei einiges Kapital der Kreditladegrenze des Endgeräts auf das Konto der elektronischen Geldkarte übertragen wird, und
das Backstage-System konfiguriert ist, um es dem Kreditladekonto, der mit dem Konto der elektronischen Geldkarte assoziiert ist, zu ermöglichen, gemäß von dem Endgerät empfangenen Informationen über die Offline-Kreditladung aktualisiert zu werden, wobei das Endgerät konfiguriert ist, um eine Aktualisierungsanforderung der Kreditladegrenze des Endgeräts an das Backstage-System zu senden, wobei die Anforderung eine Kennung eines in dem Endgerät vorgesehenen Sicherheitsmoduls umfasst, wobei das Sicherheitsmodul zum Speichern der Kreditladegrenze des Endgeräts verwendet wird,
das Backstage-System konfiguriert ist, um einen Aktualisierungsbefehl der Kreditladgrenze des Endgeräts gemäß der Aktualisierungsanforderung der Kreditladegrenze des Endgeräts zu erzeugen,
das Endgerät konfiguriert ist, um den Aktualisierungsbefehl der Kreditladegrenze des Endgeräts zu empfangen und die Kreditladegrenze des Endgeräts, die in dem Sicherheitsmodul gespeichert ist, gemäß dem Aktualisierungsbefehl der Kreditladegrenze des Endgeräts zu aktualisieren, und wobei
das Sicherheitsmodul auch einen Hauptschlüssel zur Offline-Kreditladung speichert,
die elektronische Geldkarte einen Unterschlüssel zur Offline-Kreditladung speichert, die elektronische Geldkarte konfiguriert ist, um eine Anforderung der Offline-Kreditladung an das Endgerät zu senden,
wobei die Anforderung der Offline-Kreditladung einen ersten Authentifikationskode der Offline-Kreditladung umfasst, der basierend auf dem Unterschlüssel für Offline-Kreditladung und einer ersten Kategorie Transaktionsdaten von der elektronischen Geldkarte erzeugt wird, und das Sicherheitsmodul weiterhin konfiguriert ist, um den Unterschlüssel für Offline-Kreditladung gemäß der Kennung der elektronischen Geldkarte und dem Hauptschlüssel zur Offline-Kreditladung zu berechnen und den berechneten Unterschlüssel zur Offline-Kreditladung und die erste Kategorie Transaktionsdaten zu verwenden, um einen zweiten Authentifikationskode der Offline-Kreditladung zu erzeugen; und das Sicherheitsmodul bestimmt, dass die elektronische Geldkarte die Authentifikation bestanden hat, wenn der zweite Authentifikationskode der Offline-Kreditladung der gleiche wie der ersten Authentifikationskode der Offline-Kreditladung ist,
das Endgerät konfiguriert ist, um eine Bestätigungsantwort an die Offline-Kreditladung an die elektronische Geldkarte zurückzusenden.

2. System nach Anspruch 1, **dadurch gekennzeichnet, dass**
das Endgerät konfiguriert ist, um die elektronische Geldkarte gemäß der Anforderung nach Offline-Kreditladung zu verifizieren,
die elektronische Geldkarte konfiguriert ist, um das Endgerät gemäß der Bestätigungsantwort an die Offline-Kreditladung zu verifizieren,
das Endgerät konfiguriert ist, um einen Befehl der Offline-Kreditladung an die elektronische Geldkarte zu senden, und
die elektronische Geldkarte konfiguriert ist, um das Konto der elektronischen Geldkarte gemäß dem Befehl der Offline-Kreditladung zu aktualisieren.

3. System nach Anspruch 2, **dadurch gekennzeichnet, dass**
die elektronische Geldkarte so konfiguriert ist, dass, wenn der Saldo des Kontos der elektronischen Geldkarte niedriger als ein vorbestimmter Wert ist, die elektronische Geldkarte die Anforderung zur Offline-Kreditladung an das Endgerät sendet.

4. System nach Anspruch 3, **dadurch gekennzeichnet, dass**
das Backstage-System einen Hauptschlüssel zur Grenzwertaktualisierung speichert,
das Sicherheitsmodul einen Unterschlüssel zur Grenzwertaktualisierung speichert,
wobei das Backstage-System unter Verwendung des Hauptschlüssels zur Grenzwertaktualisierung und basierend auf der Kennung des Sicherheitsmoduls den Unterschlüssel zur Grenzwertaktualisierung berechnet und den Aktualisierungsbefehl der Kreditladegrenze des Endgeräts unter Verwendung des berechneten Unterschlüssels für die Grenzwertaktualisierung verschlüsselt, und
das Endgerät unter Verwendung des Unterschlüssels zur Grenzwertaktualisierung den Aktualisierungsbefehl der Kreditladegrenze des Endgeräts entschlüsselt.

5. System nach Anspruch 1, **dadurch gekennzeichnet, dass**
die Bestätigungsantwort an die Offline-Kreditladung einen ersten Bestätigungskode der Offline-Kreditladung, der basierend auf dem berechneten Unterschlüssel für die Offline-Kreditladung von dem Sicherheitsmodul erzeugt wird, und eine zweite Kategorie von Transaktionsdaten umfasst, und
die elektronische Geldkarte weiterhin konfiguriert ist, um einen zweiten Bestätigungskode zur Offline-Kreditladung basierend auf dem Unterschlüssel zur Offline-Kreditladung und der zweiten Kategorie Transaktionsdaten zu berechnen; und wenn der zweite Bestätigungskode der Offline-Kreditladung der gleiche ist wie der erste Bestätigungskode der Offline-Kreditladung, die elektronische Geldkarte bestimmt, dass das Endgerät die Authentifizierung bestanden hat.

## Revendications

1. Système de chargement de crédit hors ligne comprenant une carte de paiement électronique, un terminal et un système en arrière-plan, dans lequel le terminal comprend un module de sécurité, dans lequel le module de sécurité du terminal est une carte SAM,
dans lequel le terminal est configuré pour effectuer une mise à jour de limite de chargement de crédit d'un terminal en communiquant avec le système en arrière-plan, la limite de chargement de crédit de terminal est une somme de capital qui permet un chargement de crédit hors ligne,
la carte de paiement électronique est configurée pour effectuer une mise à jour du compte de la carte de paiement électronique en communiquant avec le terminal, une partie du capital de la limite de chargement de crédit du terminal étant transférée sur le compte de carte de paiement électronique, et
le système en arrière-plan est configuré pour permettre au compte de chargement de crédit associé au compte de la carte de paiement électronique d'être mis à jour en fonction d'informations sur le chargement de crédit hors ligne reçues depuis le terminal, le terminal étant configuré pour envoyer une demande de mise à jour de limite de chargement de crédit du terminal au système en arrière-plan, laquelle demande comprend un ID d'un module de sécurité agencé dans le terminal, dans lequel le module de sécurité est utilisé pour mémoriser la limite de chargement de crédit du terminal,
le système en arrière-plan est configuré pour générer une instruction de mise à jour de la limite de chargement de crédit du terminal en fonction de la demande de mise à jour de limite de chargement de crédit du terminal,
le terminal est configuré pour recevoir l'instruction de mise à jour de limite de chargement de crédit du terminal et mettre à jour la limite de chargement de crédit du terminal stockée dans le module de sécurité en fonction de l'instruction de mise à jour de la limite de chargement de crédit du terminal, et dans lequel
le module de sécurité stocke également une clé principale pour un chargement de crédit hors ligne,
la carte de paiement électronique stocke une sous-clé pour un chargement de crédit hors ligne,
la carte de paiement électronique est configurée pour envoyer une demande de chargement de crédit hors ligne au terminal,
dans lequel la demande de chargement de crédit hors ligne comprend un premier code d'authentification de chargement de crédit hors ligne qui est généré par la carte de paiement électronique sur la base de la sous-clé pour chargement de crédit hors ligne et d'une première catégorie de données de transaction, et
le module de sécurité est en outre configuré pour calculer la sous-clé pour chargement de crédit hors ligne en fonction de l'ID de la carte de paiement électronique et de la clé principale pour chargement de crédit hors ligne, et pour utiliser la sous-clé calculée pour chargement de crédit hors ligne et la première catégorie de données de transaction pour générer un second code d'authentification de chargement de crédit hors ligne ; et le module de sécurité détermine que la carte de paiement électronique a passé l'authentification lorsque le second code d'authentification de chargement de crédit hors ligne est le même que le premier code d'authentification de chargement de crédit hors ligne,
le terminal est configuré pour renvoyer à la carte de paiement électronique une réponse de confirmation au chargement de crédit hors ligne.

2. Système selon la revendication 1, **caractérisé en ce que**,
le terminal est configuré pour vérifier la carte de paiement électronique en fonction de la demande de chargement de crédit hors ligne,
la carte de paiement électronique est configurée pour vérifier le terminal en fonction de la réponse de confirmation au chargement de crédit hors ligne,
le terminal est configuré pour envoyer une instruction de chargement de crédit hors ligne à la carte de paiement électronique, et
la carte de paiement électronique est configurée pour mettre à jour le compte de la carte de paiement électronique en fonction de l'instruction de chargement de crédit hors ligne.

3. Système selon la revendication 2, **caractérisé en ce que**,
la carte de paiement électronique est configurée de sorte que lorsque le solde du compte de la carte de paiement électronique est inférieur à une valeur prédéterminée, la carte de paiement électronique envoie la demande de chargement de crédit hors ligne au terminal.

4. Système selon la revendication 3, **caractérisé en ce que**,
le système en arrière-plan stocke une clé principale pour une mise à jour de limite,
le module de sécurité stocke une sous-clé pour une mise à jour de limite,
dans lequel le système en arrière-plan calcule la sous-clé pour une mise à jour de limite en utilisant la clé principale pour une mise à jour de limite et sur la base de l'ID du module de sécurité, et crypte l'instruction de mise à jour de la limite de chargement de crédit du terminal en utilisant la sous-clé calculée pour une mise à jour de limite, et
le terminal décrypte l'instruction de mise à jour de la limite de chargement de crédit du terminal en utilisant la sous-clé pour une mise à jour de limite.

5. Système selon la revendication 1, **caractérisé en ce que**,
la réponse de confirmation au chargement de crédit hors ligne comprend un premier code de confirmation de chargement de crédit hors ligne qui est généré par le module de sécurité sur la base de la sous-clé calculée pour un chargement de crédit hors ligne et d'une seconde catégorie de données de transaction, et
la carte de paiement électronique est en outre configurée pour calculer un second code de confirmation de chargement de crédit hors ligne sur la base de la sous-clé pour chargement de crédit hors ligne et de la seconde catégorie de données de transaction ; et lorsque le second code de confirmation de chargement de crédit hors ligne est le même que le premier code de confirmation de chargement de crédit hors ligne, la carte de paiement électronique détermine que le terminal a passé l'authentification.
